# EUROPÄISCHE PATENTSCHRIFT

(11) **EP 1 090 015 B1**
(45) Veröffentlichungstag und Bekanntmachung des Hinweises auf die Patenterteilung: **04.09.2002**
(21) Anmeldenummer: 99931155.8
(22) Anmeldetag: 23.06.1999
(51) Int. Cl.: C07F 9/40, C07F 9/38

(54) **VERFAHREN ZUR HERSTELLUNG VON VINYLPHOSPHONSÄURE-VERBINDUNGEN**
METHOD FOR PRODUCING VINYL PHOSPHONIC ACID COMPOUNDS
PROCEDE POUR LA PREPARATION DE COMPOSES D'ACIDE VINYLPHOSPHONIQUE

(30) Priorität: 25.06.1998 DE 19828419
(43) Veröffentlichungstag der Anmeldung: 11.04.2001
(73) Patentinhaber: BASF AKTIENGESELLSCHAFT, 67056 Ludwigshafen (DE)
(72) Erfinder: BECKER, Heike, D-67117 Limburgerhof (DE); HENKELMANN, Jochem, D-68165 Mannheim (DE); BÖTTCHER, Arnd, D-67227 Frankenthal (DE); PREISS, Thomas, D-67065 Ludwigshafen (DE); SLANY, Michael, D-67281 Kirchheim (DE)
(74) Vertreter: Isenbruck, Günter, Dr.
(86) Internationale Anmeldenummer: EP9904365
(87) Internationale Veröffentlichungsnummer: WO99067259

(56) Entgegenhaltungen:
- EP-A- 0 794 190
- WO-A-98/46613
- US-A- 3 673 285
- US-A- 5 693 826

## Beschreibung

Die vorliegende Erfindung betrifft ein Verfahren zur Herstellung von Vinylphosphonsäure-Verbindungen unter Verwendung bestimmter Katalysatoren.

Vinylphosphonsäure-Verbindungen, insbesondere Vinylphosphonsäuredialkylester sind als Vorprodukte für die Herstellung von Vinylphosphonsäure sowie als Monomere zur Copolymerisation für die Herstellung von Klebstoffen oder flammfesten Kunststoffen von Bedeutung.

Zu ihrer Herstellung sind unterschiedliche Verfahren bekannt. In dem in der DE-C-21 32 962 beschriebenen Verfahren werden Ethylenoxid mit Phosphortrichlorid zu 2-Chlorethanphosphonsäuredichlorid und diese Verbindung zu 2-Chlorethanphosphonsäure-bis-2-chlorethylester umgesetzt. Die so erhaltene Verbindung wird sodann in Gegenwart eines Katalysators mit Phosgen umgesetzt. Als Katalysator kommen Amine, heterocyclische Stickstoffverbindungen, wie auch tertiäre Phosphine zum Einsatz.

In der DE-A-30 01 894 ist ein Verfahren zur Herstellung von Vinylphosphonsäurederivaten beschrieben, bei dem 2-Acetoxyethanphosphonsäuredialkylester in Gegenwart saurer oder basischer Katalysatoren gespalten werden.

Als basische Katalysatoren werden tertiäre Amine und Phosphine, wie auch Ammoniumsalze oder Phosphoniumsalze neben heterocyclischen Verbindungen und Säureamiden vorgeschlagen. Nachteil des Verfahrens ist die Bildung eines Gemisches von Vinylphosphonsäurederivaten. Der Anteil an Vinylphosphonsäuredialkylestern beträgt maximal 23%.

Eine verbesserte Variante dieses Verfahrens gemäß DE-A-31 20 437 beinhaltet nach einer Destillation die Umsetzung des im Destillationssumpf anfallenden Produktgemisches mit Carbonsäureorthoestern zu Vinylphosphonsäuredialkylestern.

Gemäß EP-A-0 722 948 wird 2-Acetoxyethanphosphonsäuredimethylester in der Gasphase thermisch in Essigsäure und Vinylphosphonsäuredimethylester gespalten. Dabei wird kein Katalysator verwendet.

Nachteile der vorstehenden Verfahren sind die Bildung von Produktgemischen, aufwendige, mehrstufige Syntheseverfahren, der erforderliche Einsatz hoher Umsetzungstemperaturen und der Einsatz chlorierter Ausgangsverbindungen. Insbesondere der große Nebenproduktanteil verschlechtert die Verfahrensökonomie beträchtlich.

Vorteilhaft zur Synthese von Vinylphosphonsäure-Verbindungen ist eine einfache Additionsreaktion, die in hohen Ausbeuten zum gewünschten Produkt führt. Ein Beispiel für eine solche Umsetzung ist die Addition von Dialkylphosphiten an Acetylen. In der US 3,673,285 ist die Addition von Alkinen an Diethylphosphit bei Temperaturen von 130 bis 200°C in Gegenwart von Nickel-Phosphinkomplexen beschrieben. Bei der Addition von Acetylen wird der entsprechende Vinylphosphonsäurediethylester in einer Ausbeute von 30% erhalten. Nachteil dieses Verfahrens ist neben der geringen Ausbeute die Neigung der Phosphorigsäureester zur Zersetzung in stark exothermer Reaktion schon bei Temperaturen um 130°C.

US 5,693,826 betrifft die Herstellung von Vinylphosphonsäure-Verbindungen durch Umsetzung von Phosphorigsäure-Verbindungen mit Acetylen, wobei die Umsetzung in Gegenwart von Pd(0)-Komplexen durchgeführt wird. Diese Komplexe können aus zweizähnigen Liganden hergestellt werden, die 1,4-Bis(diphenylphosphino)butan aufweisen.

EP-A 0 794 190 betrifft ein Verfahren zur Herstellung von Alkenylphosphinoxid. Die beschriebenen Palladiumkatalysatoren werden mit einzähnigen Liganden eingesetzt

Aufgabe der vorliegenden Erfindung ist die Bereitstellung eines Verfahrens zur Herstellung von Vinylphosphonsäureverbindungen, das die Nachteile der bekannten Verfahren vermeidet und die gewünschten Produkte aus Acetylen und Phosphorigsäureverbindungen mit hoher Selektivität und Ausbeute unter milden Bedingungen zugänglich macht.

Die Aufgabe wird gelöst durch ein Verfahren zur Herstellung von Vinylphosphonsäure-Verbindungen der allgemeinen Formel (I), 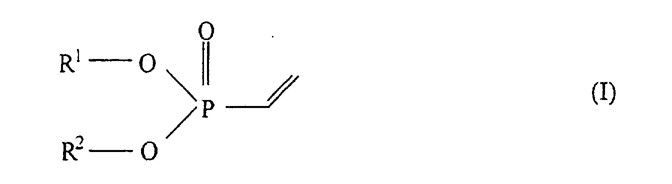 in der R¹ und R² unabhängig H, C₁₋₁₆-Alkyl-, C₆₋₁₂-Aryl-, C₇₋₁₂-Alkaryl- oder C₇₋₁₂-Aralkylreste sind, wobei die organischen Reste durch ein oder mehrere Halogenatome, Hydroxyl-, Acyl- oder Acetoxygruppen substituiert sein können,
durch Umsetzung von Phosphorigsäure-Verbindungen der allgemeinen Formel (II), 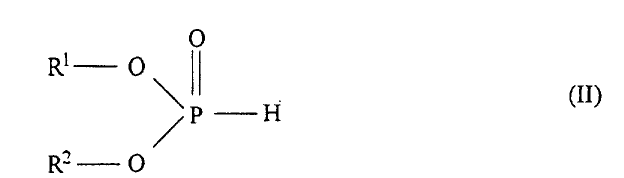 in der R¹ und R² die vorstehende Bedeutung haben, mit Acetylen in Gegenwart von Pd(0)-Komplexen oder entsprechenden Pt-Komplexen, die zweizähnige Liganden der allgemeinen Formel

R₂P-X-PR₂

- mit X: Ferrocenylen, C₁₋₆-Alkylen, gegebenenfalls unterbrochen durch O, S oder NR "mit R" Wasserstoff, C₁₋₆-Alkyl, C₆₋₁₂-Aryl, C₇₋₁₃-Alkaryl, C₇₋₁₃-Aralkyl, C₅₋₈-Cycloalkyl,
- R: jeweils unabhängig voneinander C₁₋₁₂-Alkyl, C₆₋₁₂-Aryl, C₅₋₈-Cycloalkyl, C₇₋₁₃-Aralkyl, C₇₋₁₃-Alkaryl, C₇₋₁₆-Alkoxyaryl, wobei auch beide R an einem Phosphoratom C₅₋₈-Alkylen oder C₆₋₁₀-Cycloalkylen bilden können,
aufweisen, als Katalysator, bei einer Reaktionstemperatur von 50 bis 120°C.

Erfindungsgemäß wurde gefunden, daß die Umsetzung von Acetylen mit Phosphorigsäureverbindungen, insbesondere Dialkylphosphiten mit hoher Selektivität und Ausbeute durch Verwendung einer katalytischen Menge eines Palladium- oder Platinkomplexes, vorzugsweise Palladiumkomplexes, insbesondere in homogener Phase, möglich ist. Ähnliche Palladiumkomplexe sind in der prioritätsälteren, nicht vorveröffentlichten DE-A-197 15 667 für diese Umsetzung beschrieben.

Erfindungsgemäß wurde gefunden, daß sich Acetylen unter sehr milden Bedingungen mit sehr hoher Selektivität unter Verwendung eines Palladiumkatalysators direkt zu Vinylphosphonsäure-Verbindungen, insbesondere Vinylphosphonsäuredialkylestern umsetzen läßt, ohne daß es zu einer Dimerisierung, Oligomerisierung oder Polymerisation von Acetylen kommt oder eine doppelte Umsetzung zu einem Tetraalkylethylendiphosphonat erfolgt.

In den zur Umsetzung eingesetzten Phosphorigsäure-Verbindungen der allgemeinen Formel (II) sind R¹ und R² unabhängig H, C₁₋₁₆-Alkyl-, C₆₋₁₂-Aryl-, C₇₋₁₂-Alkaryl- oder C₇₋₁₂-Aralkylreste, wobei die organischen Reste durch ein oder mehrere Halogenatome, Hydroxyl-, Acyl- oder Acetoxygruppen substituiert sein können. Vorzugsweise sind R¹ und R² unabhängig lineare C₁₋₁₂-Alkyl-, Phenyl-, (C₁₋₆-Alkyl)phenyl- oder Phenyl(C₁₋₆)-alkylreste. Besonders bevorzugt sind R¹ und R² unabhängig lineare C₁₋₆-Alkylreste, insbesondere Methylreste, d.h. es wird durch Umsetzung von Dimethylphosphit mit Acetylen Vinylphosphonsäuredimethylester erhalten. Vorzugsweise sind die Reste R¹ und R² nicht substituiert.

Sind die Reste R¹ und R² von Wasserstoff verschieden, so handelt es sich bei den eingesetzten Verbindungen um Phosphorigsäurediester. Ihre Umsetzung führt zu Vinylphosphonsäurediestern der allgemeinen Formel (I). Nach dieser Umsetzung können die Estergruppen gespalten werden, wobei Vinylphosphonsäure, R¹OH und R²OH erhalten werden.

Die Umsetzung der Phosphorigsäure-Verbindungen zu den Vinylphosphonsäure-Verbindungen erfolgt in Gegenwart mindestens eines Pd(0)-Komplexes oder entsprechenden Pt-Komplexes, vorzugsweise jedoch Pd-Komplexes als Katalysator. Dabei liegt der Katalysator in der Regel in homogener Phase vor.

Die Komplexe weisen die vorstehend aufgeführten zweizähnigen Liganden auf. Vorzugsweise ist X Ferrocenylen, lineares endständiges C₁₋₄-Alkylen oder CH₂-NR"-CH₂ mit R" = Phenyl oder Cyclohexyl.

Bevorzugt ist R jeweils unabhängig voneinander Phenyl, C₆₋₈-Cycloalkyl, oder beide R an einem Phosphoratom bedeuten Cyclooctylen.

Die Herstellung der Komplexe erfolgt vorzugsweise in situ aus einem Pd-Komplexvorläufer und den zweizähnigen Liganden. Als Komplexvorstufe eignet sich beispielsweise Palladium-bis(dibenzylidenaceton).

Bevorzugte Katalysatoren werden aus Palladium(0)-Komplexen wie Paliadium-bis-(dibenzylidenacecon) (Pd₂(dba)₃) und zweizähnigen Liganden hergestellt, wie Bis(diphenylphosphino)ferrocen, Bis-N-(diphenylphosphinomethan)-N-phenylamin, 1,2-Bis(cyclooctylenphosphino)ethan, Bis-N-(dicyclohexylphosphinomethan)-N-phenylamin, Bis(dicyclohexyl)phosphinomethan und Bis(dicyclohexyl)phosphinoethan. Dabei beträgt das Verhältnis von Pd zu Ligand im allgemeinen 1:0,5 bis 1:4. Nachstehend sind Strukturformeln bevorzugter Liganden angegeben, wobei n vorzugsweise den Wert 0, 1, 2 oder 3 hat und R die vorstehend angegebene Bedeutung hat:

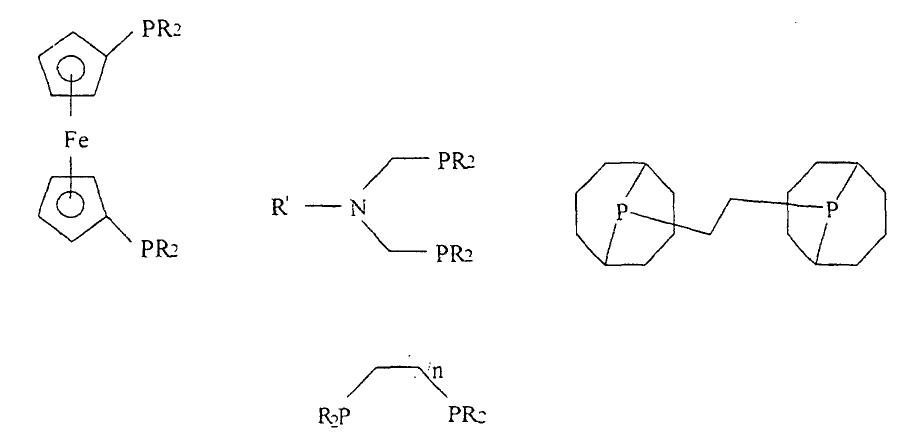

Die erfindungsgemäß eingesetzten Katalysatoren werden üblicherweise in einer Menge von 0,01 bis 10 mol-%. vorzugsweise in einer Menge von 0,5 bis 3 mol-%, besonders bevorzugt 1 bis 2 mol-%, bezogen auf die Menge der zu vinylierenden Phosphorigsäure-Verbindungen, insbesondere Dialkylphosphite, eingesetzt.

Die Reaktionstemperatur bei der Umsetzung beträgt 50 bis 120°C, besonders bevorzugt 80 bis 110°C.

Die Umsetzung kann dabei lösungsmittelfrei oder in Gegenwart eines inerten Lösungsmittels durchgeführt werden. Beispiele verwendbarer inerter Lösungsmittel sind cyclische Ether, wie THF, langkettige Ether, wie Triethylenglykoldimethylether oder Tetraethylenglykoldimethylether.

Die Umsetzung erfolgt unter Normaldruck oder erhöhtem Druck, vorzugsweise bei 1 bis 20, besonders bevorzugt 1 bis 6 bar, insbesondere Umgebungsdruck (absolut). Dabei werden vorzugsweise die Phosphorigsäure-Verbindung der allgemeinen Formel (II) und der Katalysator vorgelegt und Acetylen eingeleitet. Nach Beendigung der Umsetzung kann das Produkt durch Destillation abgetrennt werden.

Das erfindungsgemäße Verfahren kann kontinuierlich oder diskontinuierlich ausgeführt werden.

Nachstehend wird die Erfindung anhand von Beispielen näher erläutert.

### Beispiel 1:

In einer 50 ml fassenden Rührapparatur wurden 5.88 g Dimethylphosphit in 35 ml Tetraethylenglykoldimethylether gelöst, und es wurde mit Argon entgast. Nach Zugabe von 0,5 g Palladiumdibenzylidenaceton (Pd₂(dba)₃) und 1,21 g 1,1'-Bis(diphenylphophino)ferrocen wurde Acetylen eingeleitet (6l/h) und 6 h auf 100° C erhitzt. Zu diesem Zeitpunkt war der Umsatz vollständig (GC). Destillativ wurden 96% Vinyldimethylphosphit isoliert.

### Beispiel 2:

In einem 250 ml fassenden Kolben mit Innenthermometer, Rückflußkühler und Gaseinleitungsrohr wurden 5 ml Dimethylphosphit in 35 ml Tetraethylenglykoldimethylether gelöst und mit Argon entgast. Nach Zugabe von 0,75 g Palladiumdibenzylidenaceton (Pd₂(dba)₃) und 1,5 mg N-Phenyl-N-bis(diphenylphosphinomethyl)amin wurde mit Acetylen (6 l/h) begast und für 6 h auf 100°C erhitzt. Nach destillativer Aufarbeitung wurden 94%, des Vinyldimethylphosphites isoliert.

## Patentansprüche

1. Verfahren zur Herstellung von Vinylphosphonsäure-Verbindungen der allgemeinen Formel (I), 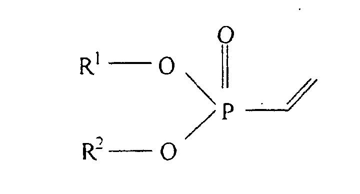 in der R¹ und R² unabhängig H, C₁₋₁₆-Alkyl-, C₆₋₁₂-Aryl-, C₇₋₁₂-Alkaryl- oder C₇₋₁₂-Aralkylreste sind, wobei die organischen Reste durch ein oder mehrere Halogenatome, Hydroxyl-, Acyl- oder Acetoxygruppen substituiert sein können,
durch Umsetzung von Phosphorigsäure-Verbindungen der allgemeinen Formel (II), 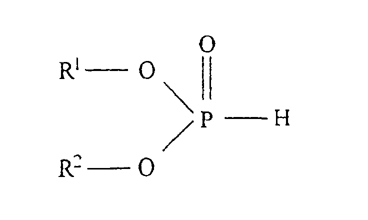 in der R¹ und R² die vorstehende Bedeutung haben,
mit Acetylen in Gegenwart von Pd(0)-Komplexen oder entsprechenden Pt-Komplexen, die zweizähnige Liganden der allgemeinen Formel
R₂P-X-PR₂
mit X Ferrocenylen, C₁₋₆-Alkylen, gegebenenfalls unterbrochen durch O, S oder NR" mit R" Wasserstoff, C₁₋₆-Alkyl, C₆₋₁₂-Aryl, C₇₋₁₃-Alkaryl, C₇₋₁₃-Aralkyl, C₅₋₈-Cycloalkyl,
R jeweils unabhängig voneinander C₁₋₁₂-Alkyl, C₆₋₁₂-Aryl, C₅₋₈-Cycloalkyl, C₇₋₁₃-Aralkyl, C₇₋₁₃-Alkaryl, C₇₋₁₆-Alkoxyaryl, wobei auch beide R an einem Phosphoratom C₅₋₈-Alkylen oder C₆₋₁₀-Cycloalkylen bilden können,
aufweisen, als Katalysator, bei einer Reaktionstemperatur von 50 bis 120°C.

2. Verfahren nach Anspruch 1, **dadurch gekennzeichnet, daß** R¹ und R² unabhängig lineare C₁₋₁₆-Alkylreste sind.

3. Verfahren nach Anspruch 2, **dadurch gekennzeichnet, daß** nach der Umsetzung die Estergruppen gespalten werden, wobei Vinylphosphonsäure, R¹OH und R²OH erhalten werden.

4. Verfahren nach einem der Ansprüche 1 bis 3, **dadurch gekennzeichnet, daß** ein Pd(0)-Komplex als Katalysator eingesetzt wird, bei dem im zweizähnigen Liganden X Ferrocenylen, lineares endständiges C₁₋₄-Alkylen oder CH₂NR"-CH₂ mit R" = Phenyl oder Cyclohexyl bedeutet.

5. Verfahren nach einem der Ansprüche 1 bis 4, **dadurch gekennzeichnet, daß** ein Pd(0)-Komplex als Katalysator eingesetzt wird, in dem in den zweizähnigen Liganden R jeweils unabhängig voneinander Phenyl, C₆₋₈-Cycloalkyl bedeutet oder beide R an einem Phosphoratom Cyclooctylen bedeuten.

6. Verfahren nach einem der Ansprüche 1 bis 5, **dadurch gekennzeichnet, daß** der Pd(0)-Komplex in situ aus einem Pd-Komplexvorläufer und den zweizähnigen Liganden gebildet wird.

7. Verfahren nach einem der Ansprüche 1 bis 6, das eines oder mehrere der nachstehenden Merkmale aufweist:
- Vorliegen eines inerten Lösungsmittels
- Druck 1 bis 20 bar
- eingesetzte Katalysatormenge 0,01 bis 10 mol-%, bezogen auf die Menge der eingesetzten Phosphorigsäure-Verbindungen
- kontinuierliche Verfahrensführung.

## Claims

1. A process for preparing vinylphosphonic acid compounds of the general formula (I) 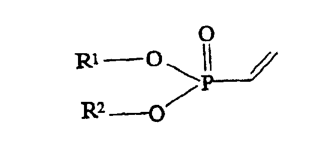 in which R¹ and R² are, independently, H, C₁₋₁₆-alkyl, C₆₋₁₂-aryl, C₇₋₁₂-alkaryl or C₇₋₁₂-aralkyl radicals, it being possible for the organic radicals to be substituted by one or more halogen atoms, hydroxyl, acyl or acetoxy groups,
by reacting phosphorous acid compounds of the general formula (II) 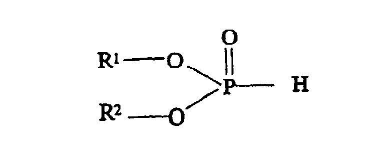 in which R¹ and R² have the abovementioned meaning,
with acetylene in the presence of Pd(0) complexes or corresponding Pt complexes which have bidentate ligands of the general formula
R₂P-X-PR₂
with X ferrocenylene, C₁₋₆-alkylene, optionally interrupted by O, S or NR" with R" hydrogen, C₁₋₆-alkyl, C₆₋₁₂-aryl, C₇₋₁₃-alkaryl, C₇₋₁₃-aralkyl, C₅₋₈-cycloalkyl,
R in each case independently of one another C₁₋₁₂-alkyl, C₆₋₁₂-aryl, C₅₋₈-cycloalkyl, C₇₋₁₃-aralkyl, C₇₋₁₃-alkaryl, C₇₋₁₆-alkoxyaryl, it also being possible for both R on a phosphorus atom to form C₅₋₈-alkylene or C₆₋₁₀-cycloalkylene,
as catalyst, at a reaction temperature of from 50 to 120°C.

2. A process as claimed in claim 1, wherein R¹ and R² are, independently, linear C₁₋₁₆-alkyl radicals.

3. A process as claimed in claim 2, wherein the ester groups are cleaved after the reaction, resulting in vinylphosphonic acid, R¹OH and R²OH.

4. A process as claimed in any of claims 1 to 3, wherein a Pd(0) complex in which X in the bidentate ligand is ferrocenylene, linear terminal C₁₋₄-alkylene or CH₂NR"-CH₂ with R" = phenyl or cyclohexyl is employed as catalyst.

5. A process as claimed in any of claims 1 to 4, wherein a Pd(0) complex in which R in the bidentate ligands is in each case independently of one another phenyl, C₆₋₈-cycloalkyl, or both R on one phosphorus atom mean cyclooctylene, is employed as catalyst.

6. A process as claimed in any of claims 1 to 5, wherein the Pd(0) complex is formed in situ from a Pd complex precursor and the bidentate ligands.

7. A process as claimed in any of claims 1 to 6, which has one or more of the following features:
- presence of an inert solvent
- pressure from 1 to 20 bar
- amount of catalyst employed from 0.01 to 10 mol% based on the amount of phosphorous acid compounds employed
- process carried out continuously.

## Revendications

1. Procédé de préparation de composés d'acide vinylphosphonique de formule générale (I) 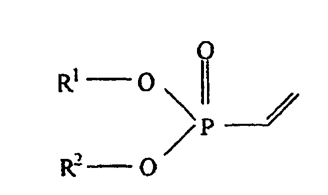 dans laquelle R¹ et R² représentent, indépendamment l'un de l'autre, un atome H, un reste alkyle en C₁ à C₁₆, aryle en C₆ à C₁₂, alkaryle en C₇ à C₁₂ ou aralkyle en C₇ à C₁₂, les restes organiques étant éventuellement substitués par un ou plusieurs atomes d'halogène ou groupes hydroxyle, acyle ou acétoxy,
au moyen d'une réaction de composés d'acide phosphoreux de formule générale (II) 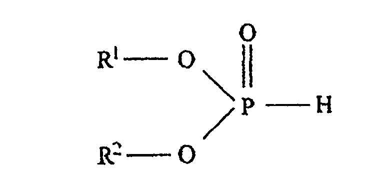 dans laquelle R¹ et R² prennent la signification susmentionnée,
avec l'acétylène en présence de complexes de Pd(0) ou de complexes de Pt correspondants qui présentent des ligands bidentés de formule générale
R₂P-X-PR₂
où
X représente un groupe ferrocénylène, alcène en C₁ à C₆ éventuellement interrompu par un atome O, S ou un groupe NR'' où
R'' représente un atome d'hydrogène, un groupe alkyle en C₁ à C₆, aryle en C₆ à C₁₂, alkaryle en C₇ à C₁₃, aralkyle en C₇ à C₁₃, cycloalkyle en C₅ à C₈,
les R représentent chacun, indépendamment l'un de l'autre, un groupe alkyle en C₁ à C₁₂, aryle en C6 à C₁₂, cycloalkyle en C₅ à C₈, aralkyle en C₇ à C₁₃, alkaryle en C₇ à C₁₃, alcoxyaryle en C₇ à C₁₆, où éventuellement les deux R d'un même atome de phosphore forment un groupe alcène en C₅ à C₈ ou cycloalcène en C₅ à C₁₀, en tant que catalyseur, en procédant à une température réactionnelle comprise entre 50°C à 120°C.

2. Procédé selon la revendication 1, **caractérisé en ce que** R¹ et R² représentent, indépendamment l'un de l'autre, un reste alkyle linéaire en C₁ à C₁₆.

3. Procédé selon la revendication 2, **caractérisé en ce que** l'on procède, ultérieurement à la réaction, à une coupure des groupes ester pour obtenir l'acide vinylphosphonique, R¹OH et R²OH.

4. Procédé selon l'une des revendications 1 à 3, **caractérisé en ce que** l'on met en oeuvre, en tant que catalyseur, un complexe de Pd(0) doté d'un ligand bidenté qui présente, en tant que groupe X, un groupe ferrocénylène, alcène linéaire en C₁ à C₆ en position terminale ou CH₂NR''-CH₂ où R" représente un groupe phényle ou cyclohexyle.

5. Procédé selon l'une des revendications 1 à 4, **caractérisé en ce que** l'on met en oeuvre, en tant que catalyseur, un complexe de Pd(0) doté d'un ligand bidenté qui présente des groupes R étant indépendant l'un de l'autre et représentant chacun un groupe phényle ou cycloalkyle en C₆ à C₈, ou bien les deux R d'un même atome de phosphore représentent un groupe cyclooctylène.

6. Procédé selon l'une des revendications 1 à 5, **caractérisé en ce que** l'on prépare, *in situ,* le complexe de Pd(0) à partir d'un précurseur du complexe de Pd(0) et d'un ligand bidenté.

7. Procédé selon l'une des revendications 1 à 6, présentant une ou plusieurs des propriétés suivantes :
- présence d'un solvant inerte,
- pression comprise entre 1 bar et 20 bars,
- quantité de catalyseur mise en oeuvre comprise entre 0,01% à 10% en moles, par rapport à la quantité des composés d'acide phosphoreux mis en oeuvre,
- réalisation du procédé en continu.
